# EUROPÄISCHE PATENTSCHRIFT

(11) **EP 3 894 792 B1**
(45) Veröffentlichungstag und Bekanntmachung des Hinweises auf die Patenterteilung: **28.08.2024**
(21) Anmeldenummer: 19823778.6
(22) Anmeldetag: 06.12.2019
(51) Int. Cl.: G01D 3/08, G01D 5/20

(54) **INDUKTIVE DREHWINKELERFASSUNG**
INDUCTIVE DETECTION OF ROTATION ANGLE
DÉTECTION INDUCTIVE D'UN ANGLE DE ROTATION

(30) Priorität: 10.12.2018 DE 102018221317
(43) Veröffentlichungstag der Anmeldung: 20.10.2021
(73) Patentinhaber: ZF Friedrichshafen AG, 88046 Friedrichshafen (DE)
(72) Erfinder: PALIT, Ajoy, 28357 Bremen (DE); GROTENDORST, Jörg, 90475 Nürnberg (DE)
(86) Internationale Anmeldenummer: PCT/EP2019/084079
(87) Internationale Veröffentlichungsnummer: WO 2020/120337

(56) Entgegenhaltungen:
- EP-A1- 1 122 520
- WO-A1-2016/119814
- DE-A1- 10 044 839
- DE-A1- 102007 015 195
- DE-A1- 102014 220 454

## Beschreibung

Die Erfindung betrifft die Erfassung eines Drehwinkels, insbesondere für eine elektrische Maschine.

Zum Beispiel im Rahmen der Elektromobilität werden elektrische Maschinen (rotierende Elektromotoren/Generatoren) in Fahrzeugen benötigt. In vielen Fällen ist hierbei eine Drehwinkel-Erfassung für die elektrische Maschine (Drehwinkel eines Rotors gegenüber einem Stator) gewünscht bzw. notwendig.

Aus "Sumida Press Release, 'SUMIDA CORPORATION introduces Inductive RotorPosition Sensor to Hybrid Electric Vehicles Market', https://www.sumida.com/ userfiles/ NEWS_EVENTS/ PRODUCTS/ 100420_RotorPositionSensor/ 20100420_E.pdf, abgerufen am 30.11.2018" ist z.B. ein induktiver Rotorpositionssensor bekannt.

Aus der DE 10 2014 220 454 A1 ist eine Sensoranordnung bekannt zur berührungslosen Erfassung von Drehwinkeln an einem rotierenden Bauteil, wobei das rotierende Bauteil mit einem scheibenförmigen Target gekoppelt ist, welches mindestens eine Metallfläche aufweist und in Verbindung mit einer Spulenanordnung, welche mindestens eine flächige Detektionsspule aufweist, mindestens eine Information zur Ermittlung des aktuellen Drehwinkels des rotierenden Bauteils erzeugt. Erfindungsgemäß umfasst die Spulenanordnung drei flächige Detektionsspulen, welche gleichmäßig verteilt am Umfang eines Kreises angeordnet sind, und das rotierende Targets umfasst mindestens zwei Metallflächen, welche durch Wirbelstromeffekte die Induktivität der flächigen Detektionsspulen in Abhängigkeit vom Überdeckungsgrad beeinflusst, wobei eine Auswerte- und Steuereinheit im Wesentlichen sinusförmige Auswertesignale, welche die Induktivitätsänderungen der Detektionsspulen repräsentieren, erzeugt und zur Berechnung des Drehwinkels auswertet.

Aus der EP 1 122 520 A1 ist ein Positionssensor bekannt zum Bestimmen einer eingestellten Position davon. Der Sensor umfasst Mittel zum Erzeugen eines zeitveränderlichen Magnetfelds, ein elektrisch leitendes Element, das so angeordnet ist, dass das zeitveränderliche Magnetfeld darin Wirbelströme erzeugt, und mindestens einen Aufnehmer zum Erzeugen eines Signals als Reaktion auf das zeitveränderliche Magnetfeld. Die Bewegung des leitenden Elements relativ zum Aufnehmer ändert die magnetische Kopplung zwischen dem Feldgenerator und dem Aufnehmer, wodurch die eingestellte Position eindeutig bestimmt werden kann.

Aus der DE 10 2007 015 195 A1 ist ein Drehwinkelsensor oder Längensensor bekannt mit zwei oder mehr Oszillatoren, der als Sensorelemente jeweils Streifenleitungen auf einem dielektrischen Träger aufweist, wobei die Oszillatoren entsprechend der Winkelmessung bogenförmig oder entsprechend der Positionsmessung geradlinig aufgereiht sind, wobei ein oder mehrere Betätigungselemente, beispielsweise Wirbelstrom-Betätigungselemente, in einer Relativbewegung über den Bogen oder die Linie geführt werden und wobei die Streifenleitungen derart geformt sind, dass das eine oder die mehreren Betätigungselemente mehr als einen Oszillator überdecken.

Aus der DE 100 44 839 A1 ist ein Positionssensor bekannt, dieser enthält eine über eine Leiterschleifeneinrichtung zu führende, magnetfelderzeugende Feldeinrichtung. Die Schleifeneinrichtung weist mindestens eine Spule mit sich gegenseitig umschließenden Leiterwindungen und sich von einer Breitseite zu einer Schmalseite verjüngender Außenkontur, eine an die Auslenkung der Feldeinrichtung angepasste Ausdehnung sowie eine Abdeckung durch eine weichmagnetische Schicht auf. Es sind Mittel zur Signalauswertung der an der Schleifeneinrichtung gewonnenen, von Änderungen der magnetischen Sättigung abhängigen Signale vorgesehen.

Der Erfindung liegt die Aufgabe zugrunde, die induktive Drehwinkelerfassung zu verbessern.

Die Aufgabe wird gelöst durch eine Sensoranordnung zur Erfassung eines Drehwinkels eines Flusselements, das entlang einer Kreisbahn um eine Drehachse drehbar bzw. rotierbar ist. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Die Sensoranordnung enthält mindestens ein, insbesondere ein, zwei, drei oder vier Flusselemente. Das Flusselement weist insbesondere einen Radialabstand zur Drehachse auf, der ungleich Null ist und/oder ist ein passives Flusselement. Das Flusselement ist insbesondere fest auf einem Träger montiert, wobei dann der gesamte Träger zusammen mit dem Flusselement um die Drehachse drehbar ist. Der Träger kann Teil der Sensoranordnung sein. Die Sensoranordnung dient dann auch zur Bestimmung eines aktuellen Drehwinkels des Trägers um die Drehachse.

Die Sensoranordnung enthält außerdem mindestens eine, insbesondere eine, zwei, drei, vier, fünf oder sechs, Spulengruppen. Jede der Spulengruppen enthält jeweils mindestens eine, insbesondere eine, zwei oder drei Flachspulen. Insgesamt sind mindestens zwei Flachspulen vorhanden. Die Flachspulen erstrecken sich jeweils entlang einer Fläche. Die Fläche umgibt die Drehachse konzentrisch. Die Fläche verläuft parallel entlang der Kreisbahn. Alle Flachspulen einer Spulengruppe - und damit auch die gesamte Spulengruppe - erstrecken sich jeweils über denselben Drehwinkelbereich bezüglich der Drehachse. Insbesondere enthält die Sensoranordnung mindestens zwei Spulengruppen mit jeweils mindestens zwei Flachspulen. Der Zusatz "Flach" in "Flachspule" bezieht sich hier auf die Fläche, d.h. die Flachspulen erstrecken sich flächig oder flächenhaft in der Fläche.

Die Flachspulen sind derart geformt, dass eine aktuelle Induktivität jeder Flachspule von dem aktuellen Drehwinkel des Flusselements bezüglich der Drehachse, d.h. seiner Umfangsposition entlang der Kreisbahn, abhängig ist.

Die Sensoranordnung enthält weiterhin eine Auswerteeinrichtung. Diese ist - zum Beispiel durch Festverdrahtung oder Programmierung - dazu eingerichtet, für jede der Flachspulen deren aktuelle Induktivität zu einem bestimmten Zeitpunkt zu ermitteln. Weiterhin ist sie dazu eingerichtet, einen aktuellen jeweiligen Einzeldrehwinkel des Flusselements anhand der ermittelten Induktivität der jeweiligen Flachspule zu bestimmen. Weiterhin ist sie dazu eingerichtet, den Drehwinkel des Flusselements auf der Basis wenigstens zweier übereinstimmender Einzeldrehwinkel zweier verschiedener Flachspulen bereitzustellen. Die Einzeldrehwinkel müssen dabei im Rahmen eines akzeptablen Fehlermaßes übereinstimmen. Alternativ wird eine Fehlermaßnahme ergriffen, zum Beispiel eine Fehlermeldung ausgegeben, wenn nicht wenigstens zwei Einzeldrehwinkel entsprechend übereinstimmen.

Insbesondere enthält mindestens eine der Spulengruppen eine (dritte) oder noch mehr weitere Flachspulen. Diese führen dann weitere Redundanz in die Sensoranordnung bzw. Spulengruppe ein, da weitere Einzeldrehwinkel für die gleiche Relativlage von Flusselement und Spulengruppe ermittelt werden und zur Auswertung zur Verfügung stehen.

Insbesondere beträgt die Summe aller Drehwinkelbereiche mindestens 360°, sodass alle möglichen Drehwinkel des Flusselements um die Drehachse erfasst werden können.

Die Flachspulen sind also derart geformt, dass eine aktuelle Induktivität jeder Flachspule von einer Position des Flusselements entlang der Kreisbahn abhängig ist. Mit anderen Worten können unterschiedliche zu ermittelnde Drehwinkel anhand der ermittelten Induktivitäten eindeutig unterschieden werden.

Mit der Sensoranordnung können praktisch beliebig viele Drehwinkel des Flusselements bestimmt werden. Es ist nicht notwendig, einem zu bestimmenden Drehwinkel eine Flachspule zuzuordnen. Eine Anzahl und/oder Lage von zu bestimmenden Drehwinkeln kann frei gewählt und zu einem beliebigen Zeitpunkt verändert werden. Die Sensoranordnung kann flexibel für verschiedene Anwendungsfälle eingesetzt werden und zu erkennende Drehwinkel können bei Bedarf kalibriert werden. Die Sensoranordnung kann beispielsweise für eine elektrische Maschine zur Bestimmung des aktuellen Drehwinkels des Rotors gegenüber einem Stator eingesetzt werden.

Durch Bestimmung des Drehwinkels des Flusselements mittels dreier Flachspulen in einer Spulengruppe kann eine Redundanz geschaffen sein, die einen Betrieb der Sensoranordnung bzw. eine korrekte Erkennung des Drehwinkels auch dann erlaubt, wenn eine der Flachspulen ausfallen sollte, beispielsweise aufgrund eines Kurzschlusses oder einer Unterbrechung des Spulendrahts.

Ein Abstand zwischen der Kreisbahn und Fläche ist weiter bevorzugt konstant. Die Kreisbahn kann auch bevorzugt der Fläche mit konstantem Abstand folgen.

Die Erfindung kann insbesondere zur Rotorpositionserkennung in elektrischen Maschinen bzw. Motoren/Generatoren eingesetzt werden, insbesondere im Bereich der Elektromobilität.

Die vorliegende Erfindung nutzt mindestens zwei, insbesondere drei, Flachspulen, die - insbesondere in Radialrichtung, in Axialrichtung oder in einer kombinierten Radial-Axialrichtung - bezüglich der Drehachse nebeneinander angeordnet sind. Bezüglich ihrer Länge sind sie in Umfangsrichtung, kreissegment- bzw. bogenförmig in gleicher oder ähnlicher Weise um die Drehachse herum geformt bzw. gebogen

Die Erfindung beruht unter anderem auf der Erkenntnis, dass die genaue Messung des Drehwinkels eines Rotors sehr wichtig für einen Elektromotor basierend auf Elektromobilitätsprojekten ist. Aufgrund eines großen Hindernisses auf einer Straße ist es vorstellbar, dass Räder eines Elektromobils sich nicht vorwärts bewegen können. In der Folge entsteht für den Elektromotor ein Zustand "blockierter Rotor". Dieser Zustand kann mit einem Drehwinkel-Positionssensor für den Rotor erkannt werden. Ansonsten könnte in einem Zustand "blockierter Rotor" eine MOSFET basierte H-Brücke oder der Motor abbrennen.

Dank der Erfindung kann die korrekte Drehwinkel-Position des Rotor ermittelt und eine geeignete Maßnahme ergriffen werden, um die oben genannte Situation zu verhindern, d.h. die Zerstörung der H-Brücke oder des Motors selbst durch einen hohen Stromfluss vermieden werden.

Gemäß der Erfindung werden zwei oder drei (in einer Ebene) trapezoide Flachspulen aus einer ebenen in eine gebogene Form überführt, sodass sie sich in die konzentrische Fläche um die Drehachse einfügen. Die Flachspulen sind hierbei insbesondere direkt auf einer Leiterplatte gedruckt. Die Leiterplatte kann dabei intern an einem stationären bzw. festen Teil eines Elektromotors, zum Beispiel am Stator, befestigt werden.

Insbesondere wird weiterhin eine dünne leitfähige Platte (Flusselement) aus Kupfer/Aluminium, insbesondere mit einer speziellen Gestalt bzw. Kontur, auf einer nicht leitenden Scheibe oder einem Zylinder (Träger) befestigt und fest an die rotierende Rotorwelle befestigt. In der Folge gleitet die Platte über die Flachspulen hinweg bei Drehung um die Drehachse. Diese Kombination aus Flachspulen und Flusselement (Kupferaktivator-Element) bildet die Basis eines induktiven Drehwinkelsensors (IRPS, Inductive Rotor Position Sensor). Der Drehwinkel des Rotors wird basierend auf den oben genannten Signalen berechnet. Eine Spulengruppe aus drei solchen trapezoiden Flachspulen (gebogen in rotatorische Form) deckt insbesondere wenigstens 60°, höchstens 90° Drehwinkelbereich um die Drehachse ab. Daher werden für die Messung eines vollen Drehbereiches (360°) der Rotorposition (Drehwinkel) wenigstens vier Spulengruppen (4 × 90° = 360°) oder höchstens sechs Spulengruppen (6 × 60° = 360°) zweier oder dreier solcher trapezoider Flachspulen von rotatorischer Form benötigt, wenn sich diese in Umfangsrichtung um die Drehachse nicht überlappen und lückenlos aneinander anschließen.

In einer bevorzugten Ausführungsform enthält die Sensoranordnung mindestens zwei Spulengruppen. Mindestens zwei der Spulengruppen erstrecken sich in Umfangsrichtung um die Drehachse über unterschiedliche Drehwinkelbereiche. Die Drehwinkelbereiche überlappen sich in Umfangsrichtung zumindest nicht vollständig, insbesondere überhaupt nicht. Insbesondere sind mindestens zwei der Drehwinkelbereiche gleich groß (in Umfangsrichtung). Insbesondere für eine Rundumerfassung um die Drehachse müssen so einzelne Flachspulen nur einen bestimmten Drehwinkelbereich, nicht jedoch den vollen Umfang überdecken und können somit einfacher ausgeführt werden.

In einer bevorzugten Variante dieser Ausführungsform überlappen mindestens zwei, insbesondere alle, der Drehwinkelbereiche nicht und schließen in Umfangsrichtung lückenlos aneinander an. So kann mit Flachspulen, welche sich in Umfangsrichtung über einen vergleichsweise kleinen einzelnen Drehwinkelbereich erstrecken, ein möglichst großer gesamter Drehwinkelbereich der aneinander anschließenden einzelnen Drehwinkelbereiche erfasst werden. Insbesondere sind vier Drehwinkelbereiche zu je 90° oder sechs Drehwinkelbereiche zu je 60° vorgesehen, um jeweils eine 360°-Drehwinkelerfassung zu realisieren.

In einer bevorzugten Ausführungsform ist die Fläche eben und erstreckt sich quer zur Drehachse. Die Fläche beschreibt damit also eine Kreisringform. Alternativ weist die Fläche eine Konusform oder eine Kreiskegelform oder eine Mantelflächenform eines - insbesondere geraden - Kreiszylinders um die Drehachse auf. Entsprechende Flächen und damit auch Flachspulen, die sich entlang dieser Flächen erstrecken, lassen sich besonders einfach realisieren.

In einer bevorzugten Ausführungsform weist das Flusselement eine sinusförmige Eigenschaft entlang der Kreisbahn auf. Die Eigenschaft bezieht sich insbesondere auf die Form, das Material, die Dicke (Radial- oder Axialrichtung oder Kombination), die Breite (Axial- oder Radialrichtung oder Kombination) des Flusselements. Die Flachspule kann in diesem Fall insbesondere mit homogenen bzw. gleichbleibenden Eigenschaften (Breite, Dicke, Material, Windungszahl, Geometrie, usw.) - insbesondere in Umfangsrichtung - und damit besonders einfach ausgeführt sein.

Gemäß der Erfindung ist mindestens eine der Flachspulen derart geformt, dass jeweils die Größe eines vom Flusselement abgedeckten Bereichs einer Flachspule in der Fläche vom aktuellen Drehwinkel des Flusselements, also von der Position des Flusselements entlang der Kreisbahn, abhängig ist. Der durch das Flusselement abgedeckte Bereich kann anhand einer Projektion des Flusselements auf die Fläche bzw. die Flachspule in Richtung der Normalen der Fläche bestimmt werden. Die Projektionsrichtung ist hierbei insbesondere in Richtung einer senkrechten zur Kreisbahn auf die Flachspule hingerichtet. Bevorzugt ist der gesamte Bereich, den das Flusselement über seine verschiedenen Drehwinkel in der Fläche abdecken kann, durch jeweils mindestens eine der Flachspulen abgedeckt. Je größer der vom Flusselement abgedeckte Bereich einer Flachspule ist, desto stärker kann sein Einfluss auf deren Induktivität sein. Durch Verknüpfung des abgedeckten Bereichs einer Flachspule mit dem Drehwinkel kann die Induktivität der Flachspule vom Drehwinkel des Flusselements abhängig sein, sodass der Drehwinkel auf der Basis der Induktion bestimmt werden kann.

Die Kreisbahn erstreckt sich gemäß der Erfindung zwischen einem Startwinkel und einem Endwinkel. Eine Breite einer ersten - und insbesondere einer dritten Flachspule, falls eine solche vorhanden ist - mindestens einer Spulengruppe nimmt dabei quer zur Kreisbahn vom Startwinkel aus zum Endwinkel hin ab, während eine Breite einer zweiten Flachspule der selben Spulengruppe in der gleichen Richtung vom Startwinkel aus zum Endwinkel hin zunimmt. Dadurch können die Flachspulen verbessert kompakt angeordnet werden. Die erste und die dritte Flachspule können für den oben genannten Fall insbesondere so beschaffen sein, dass ihre Induktivitäten einander bei jedem Drehwinkel des Flusselements entsprechen.

Für mindestens eine der Spulengruppen, die hier mindestens drei Flachspulen enthält, liegt die zweite Flachspule in einer Richtung quer zur Kreisbahn zwischen der ersten und der dritten Flachspule. Dadurch kann eine besonders kompakte Bauform der Flachspulen realisiert werden. Eine gegenseitige Beeinflussung benachbarter Flachspulen kann außerdem verringert sein.

In einer bevorzugten Ausführungsform nehmen die Flachspulen mindestens einer der Spulengruppen zusammen ein Kreisringsegment oder einen Konusmantel oder einen senkrechten Kreiszylindermantel der Fläche ein. Dadurch können die Flachspulen kompakt aufgebaut sein und gemeinsam leicht angeordnet oder verbaut werden. Das Flusselement kann dabei insbesondere eine (im Sinne des "Aufwickelns" bzw. "Biegens" entlang der bzw. parallel zur Fläche) rechteckige Form aufweisen, wobei Breiten des Flusselements und der Fläche der Flachspulen gleich sein können und eine Länge des Flusselements in Richtung der Kreisbahn bevorzugt kleiner als die Länge der Fläche der Flachspulen ist.

Eine Flachspule umfasst üblicherweise mehrere Windungen, die in der Fläche liegen. Eine innerste Windung kann die Form eines auf die Fläche "aufgerollten" bzw. "gebogenen" ursprünglich ebenen Trapezoids oder Dreiecks haben und weiter außen liegende Windungen können jeweils konstanten Abstand zur nächsten weiter innen liegenden Windung aufweisen. Dadurch können alle Windungen außer der innersten jeweils die Form eines auf die Fläche aufgerollten bzw. gebogenen Dreiecks oder Trapezoids aufweisen. Man kann auch allgemein von einer trapezförmigen Flachspule sprechen, wobei ein Dreieck eine Sonderform des Trapezoids darstellt, bei der zwei benachbarte Ecken zu einer einzigen Ecke zusammenfallen.

In einer Ausführungsform mit Spulengruppe mit mindestens drei Flachspulen haben die innersten Windungen der ersten und der dritten Flachspule jeweils die Form eines auf die Fläche aufgerollten bzw. gebogenen rechtwinkligen Trapezes und die innerste Windung der zweiten Flachspule hat die Form eines auf die Fläche aufgerollten bzw. gebogenen ursprünglich in einer Ebene gleichwinkligen Trapezes. Die äußeren Windungen der ersten und der dritten Flachspule haben dann im Wesentlichen jeweils die Form eines entsprechend gebogenen rechtwinkligen Trapezes und die äußeren Windungen der zweiten Flachspule die eines entsprechend gebogenen gleichschenkligen, symmetrischen Trapezes.

In einer bevorzugten Ausführungsform verlaufen die Breiten der Flachspulen entlang der Kreisbahn jeweils streng monoton. Dadurch können sich die Induktivitäten der Flachspulen auch streng monoton über die Position des Flusselements entlang der Kreisbahn (Drehwinkel) entwickeln. Eine eindeutige Bestimmung der Position des Flusselements auf der Basis der Induktivität einer Flachspule kann dadurch ermöglicht sein.

In einer bevorzugten Ausführungsform umfasst mindestens eine der Flachspulen mehrere Ebenen. Die Ebenen können entlang einer Abstandsrichtung der Kreisbahn zur Fläche angeordnet sein. Praktisch kann eine Flachspule als Print-Spule in Form einer Leiterbahn auf einer Platine gebildet werden. Um mehrere Ebenen zu umfassen, können Spulen auf mehreren Lagen der Platine gebildet und elektrisch miteinander verschaltet werden, um eine Flachspule zu bilden. Dabei weisen die Spulen auf den verschiedenen Lagen üblicherweise gleiche Formen, Flächen und Windungsrichtungen auf.

Dabei können Spulen auch auf beide Seiten der Lagen angebracht werden, z.B. können bei einer 4-lagigen Flachspule die einzelnen Spulenebenen auf beiden Seiten einer (4-lagigen) Leiterplatte angebracht werden. Ein jeweiliges (also insgesamt zwei) Flusselement kann dann auf beiden Seiten der Leiterplatte vorhanden sein, um die Flachspule von beiden Seiten zu beeinflussen. Die beeinflussende Wirkung wird so verstärkt. Insbesondere kann dann ein U-förmiges Flusselement einen Rand einer Trägerscheibe beidseitig umgreifen, an deren Außenumfang die Spulengruppen angebracht sind.

In einer bevorzugten Ausführungsform enthält das Flusselement ein elektrisch leitfähiges Element, das sich insbesondere parallel zur Fläche erstreckt. Das leitfähige Element kann die Induktivität einer Flachspule, in deren elektromagnetischem Feld es sich befindet, verringern und so als Dämpfungselement wirken. Dabei nimmt das Flusselement Energie aus dem elektromagnetischen Feld auf und bildet Wirbelströme im elektrisch leitfähigen Material.

In einer anderen Ausführungsform kann ein Flusselement verwendet werden, das die Induktivität einer Flachspule erhöht, wenn es sich in ihrem elektromagnetischen Feld befindet. Das Flusselement ist dabei bevorzugt aus einem elektrisch schlecht leitenden, ferrimagnetischen Material wie Ferrit oder Eisen gefertigt.

Die Aufgabe der Erfindung wird auch gelöst durch eine elektrische Maschine gemäß Patentanspruch 10. Die Maschine enthält einen Stator und mit einem um eine Drehachse relativ zum Stator drehbaren Rotor und eine Sensoranordnung nach einem der vorhergehenden Ansprüche, wobei die Drehachse der Sensoranordnung die Drehachse der Maschine ist und das Flusselement drehfest mit dem Rotor gekoppelt ist und die Spulengruppen drehfest mit dem Stator gekoppelt sind. Auch eine umgekehrte Variante (Spulengruppen am Rotor, Flusselement am Stator) ist möglich.

Die Maschine und zumindest ein Teil deren Ausführungsformen sowie die jeweiligen Vorteile wurden sinngemäß bereits im Zusammenhang mit der erfindungsgemäßen Sensoranordnung erläutert.

In einer bevorzugten Ausführungsform enthält die Maschine oder die Sensoranordnung einen elektrisch nicht leitenden, am Rotor befestigten Träger. Die Flusselemente sind auf dem Träger montiert. Der Träger ist insbesondere eine Scheibe oder ein gerader Kreiszylinder bezüglich der Drehachse.

Der Aspekt eines solchen Trägers und zumindest ein Teil solcher Ausführungsformen sowie die jeweiligen Vorteile wurden sinngemäß bereits im Zusammenhang mit der erfindungsgemäßen Sensoranordnung erläutert.

In Bezug auf die Sensoranordnung kann die Auswerteeinrichtung eine Verarbeitungseinrichtung umfassen, die dazu eingerichtet ist, ein im Folgenden beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Sensoranordnung übertragen werden oder umgekehrt.

Die Aufgabe der Erfindung wird daher auch gelöst durch ein Verfahren gemäß Anspruch 12 zur Erfassung eines Drehwinkels eines Flusselements einer erfindungsgemäßen Sensoranordnung oder einer erfindungsgemäßen Maschine. Bei dem Verfahren wird für jede der Flachspulen die aktuelle Induktivität ermittelt. Anschließend wird ein aktueller jeweiliger Einzeldrehwinkel des Flusselements anhand der ermittelten Induktivität der jeweiligen Flachspule bestimmt. Anschließend wird der Drehwinkel des Flusselements auf der Basis wenigstens zweier übereinstimmender Einzeldrehwinkel bereitgestellt.

Das Verfahren und zumindest ein Teil dessen Ausführungsformen sowie die jeweiligen Vorteile wurden sinngemäß bereits im Zusammenhang mit der erfindungsgemäßen Sensoranordnung und der erfindungsgemäßen Maschine erläutert.

Das Verfahren umfasst also die Schritte des Bestimmens von Induktivitäten der Flachspulen; des Bestimmens von Einzelrehwinkeln des Flusselements jeweils bezüglich einer der bestimmten Induktivitäten bzw. Flachspulen; und des Bereitstellens eines Drehwinkels des Flusselements auf der Basis von wenigstens zwei einander entsprechenden der bestimmten Einzeldrehwinkel. Entsprechen die zwei - oder insbesondere drei oder mehr - bestimmten Einzeldrehwinkel einander, so kann der Drehwinkel des Flusselements auf der Basis aller Einzelrehwinkel bestimmt werden. Einander entsprechende Einzeldrehwinkel weichen üblicherweise aufgrund von Imperfektion bei der Bestimmung leicht voneinander ab. Das Bereitstellen des Drehwinkels kann beispielsweise das Bilden eines Minimums, eines Maximums, eines Mittelwerts der bestimmten Einzeldrehwinkel oder die Auswahl eines der bestimmten Einzeldrehwinkel umfassen, die einer vorbestimmten der zwei oder drei oder mehr Flachspulen zugeordnet ist. Entsprechen nur zwei der Einzeldrehwinkel einander, so kann der Drehwinkel des Flusselements auf der Basis dieser beiden bestimmten Einzeldrehwinkel bestimmt werden. In einer allgemeinen Ausführungsform sind N Flachspulen im Bereich des Flusselements vorgesehen, wobei bevorzugt N > 2 gilt und N weiter bevorzugt ungerade ist. Der Drehwinkel des Flusselements kann dann bezüglich einer Mehrheit einander entsprechender Einzeldrehwinkel bestimmt werden, die jeweils einer der Flachspulen zugeordnet sind. Die Sensoranordnung kann allgemein auch nach Ausfall von N-2 Flachspulen weiter den Drehwinkel des Flusselements bestimmen. Aus Platzgründen und einer zu erwartenden Wahrscheinlichkeit des Ausfalls von mehr als einer Flachspule zur gleichen Zeit wird vorgeschlagen, N=3 (pro Spulengruppe) zu wählen.

Gemäß der Erfindung enthält die Sensoranordnung mindestens 3 Flachspulen. Eine (für den Fall, dass eine solche vorhanden ist) defekte Flachspule wird erkannt bzw. bestimmt, falls ein auf der Basis ihrer Induktivität bestimmter Einzeldrehwinkel von einander entsprechenden Einzeldrehwinkeln abweicht, die auf der Basis der anderen Flachspulen bestimmt wurden. Insbesondere wird diese Verfahrensvariante innerhalb einer Spulengruppe ausgeführt, die mindestens 3 Flachspulen enthält. Ein Signal oder eine Nachricht, die auf die defekte Flachspule hinweist, kann bereitgestellt werden. Die defekte Flachspule kann vom weiteren Betrieb der Sensoranordnung ausgeschlossen werden. Die Sensoranordnung kann zumindest solange weiter betrieben werden, wie insbesondere innerhalb der betreffenden Spulengruppe keine weitere der Flachspulen als defekt bestimmt wird.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: eine erfindungsgemäße Sensoranordnung einer Maschine,
- Figur 2: den Verlauf von Induktivitäten über dem Drehwinkel in der Sensoranordnung aus Fig. 1,
- Figur 3: ein Ablaufdiagramm für ein Verfahren zur Ermittlung des Drehwinkels in Fig. 1,
- Figur 4: die elektrische Maschine aus Fig. 1 in a) Seitenansicht und b) eine alternativen Träger mit Flusselementen in Frontalansicht,
- Figur 5: alternative Flachspulen und Flusselemente in Zylinderform a) sinngemäß entsprechend Fig. 1 und b) mit sinusförmigem Flusselement und homogenen Flachspulen,
- Figur 6: a) die Anordnungen aus Fig. 5 in der Maschine nach Fig. 4 mit b) einer alternativen Geometrie in Konusform,
- Figur 7: eine alternative Spulengruppe mit zwei Flachspulen,
- Figur 8: eine alternative Sensoranordnung mit einer Flachspule pro Spulengruppe.

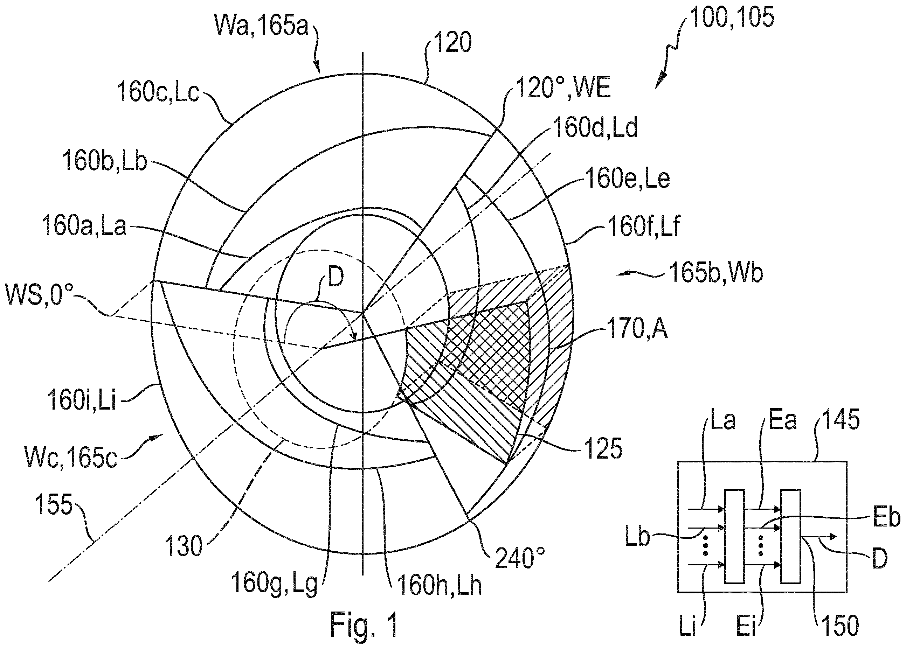

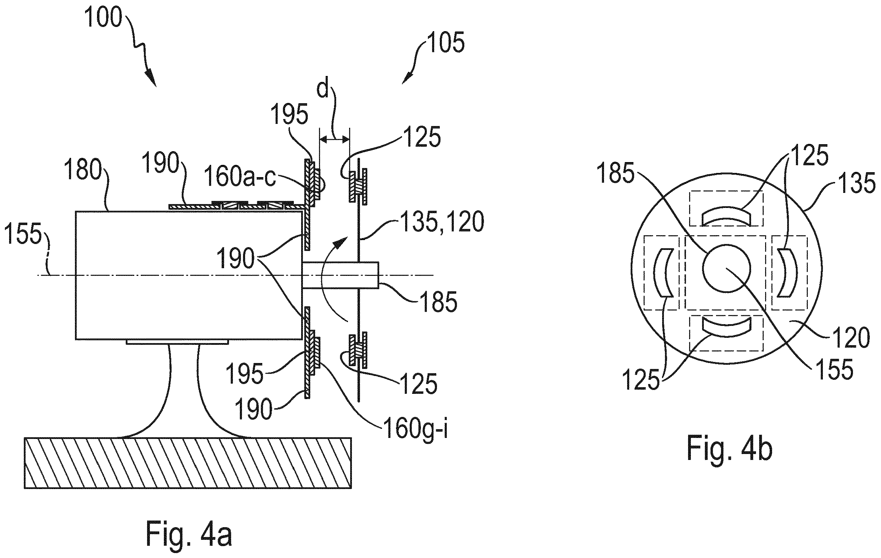

Figur 1 zeigt einen Ausschnitt aus einer nicht weiter dargestellten elektrischen Maschine 100 (siehe z.B. Fig. 4), nämlich lediglich eine darin montierte Sensoranordnung 105. Die Sensoranordnung 105 ist dazu eingerichtet, den Drehwinkel eines ersten Elements (Flusselement 125) gegenüber einem zweiten Element (Spulengruppen 165a-c) zu bestimmen, wie unten erläutert wird. Die Maschine 100 enthält (siehe Fig. 4a) einen Stator 180 und einen Rotor 185, der um eine Drehachse 155 relativ zum Stator 180 rotierbar ist.

Die Sensoranordnung 105 umfasst eine erste Flachspule 160a, eine zweite Flachspule 160b und eine dritte Flachspule 160c, die in einer Radialrichtung bezüglich einer Drehachse 155 der Sensoranordnung 105 (fällt mit der Drehachse 155 der Maschine 100 zusammen) in einer Radialrichtung bezüglich der Drehachse 155 "nebeneinander" in einer Fläche 120 liegen, die hier eben ist und eine Kreisscheibe bildet. Vorliegend erstreckt sich die Fläche 120 in einer Axialebene senkrecht zur Drehachse 155. Axial versetzt zur Ebene 120 entlang der Drehachse 155 ist ein Flusselement 125 angebracht, das entlang einer vorbestimmten Trajektorie, hier einer Kreisbahn 130, um die Drehachse 155 rotierbar ist. In der dargestellten Ausführungsform fällt die Kreisbahn 130 ebenfalls mit einer Ebene quer zur Drehachse 155 zusammen. Das Flusselement 125 ist in der dargestellten Ausführungsform ein Kreisringsegment und umfasst vier Kanten, die paarweise radial und paarweise in Umfangsrichtung der Drehachse 155 und allesamt parallel zur Fläche 120 verlaufen.

Bevorzugt ist die Sensoranordnung 105 dazu eingerichtet, an Bord eines Kraftfahrzeugs dazu eingesetzt zu werden, den Drehwinkel des Rotors 185 gegenüber des Stators 180 der Maschine 100 zu bestimmen. Hierzu ist das Flusselement 125 drehfest am Rotor 185 und die Spulengruppen 165a-c sind drehfest am Stator 180 befestigt bzw. mit diesen gekoppelt. Das Flusselement 125 ist dabei auf einem Träger 135 gehalten, der wiederum am Rotor 185 befestigt ist.

Die Flachspulen 160a-c bilden eine erste Spulengruppe 165a. Diese erstreckt sich auf einem ersten Drehwinkelbereich Wa von 120° (0° bis 120°) um die Drehachse 155. Zwei weitere Dreiergruppen von Flachspulen 160d-i bilden zwei weitere Spulengruppen 165b-c, die der ersten Spulengruppe 165 a gleichen und daher nicht nochmals erläutert werden. Auch diese erstrecken sich über Drehwinkelbereiche Wb (120° bis 240°) und Wc (240° bis 0°) von je 120°. Die Drehwinkelbereiche Wa-c schließen überlappungsfrei und lückenlos aneinander an. So sind alle Drehwinkel D von 0° bis 360° mit Flachspulen 160a-i bzw. Spulengruppen 165a-c abgedeckt.

Die Flachspulen 160a-i sind hier auf einem in Fig. 1 nicht dargestellten Tragteil 190 angebracht, um eine separat handhabbare Einheit zu bilden. Das Tragteil 190 ist am Stator 185 der Maschine 100 angebracht und deren Rotor 185 ist mit dem Flusselement 125 verbunden, sodass das Flusselement 125 gegenüber den Flachspulen 160a-c entlang der Kreisbahn 130 rotiert wird, wenn sich die Maschine 100 bzw. deren Rotor 185 dreht.

Das Tragteil 190 kann insbesondere eine Platine umfassen und die Flachspulen 160a-i können als Leiterbahnen auf der Platine ausgebildet sein. Optional kann die Platine mehrere Ebenen bzw. Lagen umfassen, auf denen jeweils ein Abschnitt einer Flachspule 160a-i als Leiterbahn und damit auch als Ebene ausgebildet sein kann, wobei die Abschnitte bzw. Ebenen einer Flachspule 160a-i elektrisch miteinander verbunden sind. Das Flusselement 125 enthält bzw. besteht aus einem elektrisch leitfähigen Material bzw. Element wie Kupfer, um als Dämpfungselement für die Induktivitäten La-i der Flachspulen 160a-i zu wirken. Das Flusselement 125 erstreckt sich parallel zur Fläche 120 und ist schraffiert hervorgehoben.

Die Kreisbahn 130 erstreckt sich in der dargestellten Ausführungsform 360° um die Drehachse 155, so dass sich das Flusselement 125 in allen Drehwinkeln D von 0° bis 360° vollständig über (oder unter) der Fläche 120 befindet.

Die Flachspulen 160a-i sind so geformt, dass ein durch das Flusselement 125 abgedeckter Bereich 170 jeder Flachspule 160a-i von einer Position bzw. einem Drehwinkel D des Flusselements 125 entlang der Kreisbahn 130 abhängig ist. Für die Flachspule 160e ist der aktuell abgedeckte Bereich 170 mit Kreuzschraffur dargestellt. Der gesamte Bereich aller Flachspulen 160a-i, den das Flusselement 170 aktuell abdeckt ist zu diesem unterschiedlich schraffiert dargestellt.

Vorliegend sind die Flachspulen 160a und 160c so geformt, dass ihr jeweils durch das Flusselement 125 abgedeckter Bereich 170 bzw. dessen Fläche bzw. Größe A dann am größten ist, wenn sich das Flusselement 125 am Drehwinkel 0° befindet und der abgedeckte Bereich streng monoton abnimmt, wenn das Flusselement 125 in Richtung des Drehwinkels 120° verschoben wird. Die Flachspule 160b ist so geformt, dass ihr durch das Flusselement 125 abgedeckter Bereich 170 dann am kleinsten ist, wenn sich das Flusselement 125 am Drehwinkel 0° befindet und der abgedeckte Bereich streng monoton zunimmt, wenn das Flusselement 125 in Richtung zum Drehwinkel 120° hin verschoben wird. Die diesbezüglich gegenläufige Anordnung der Flachspule 160b gegenüber den Flachspulen 160a,c ist für die Funktion der Sensoranordnung 105 nicht unbedingt erforderlich, kann aber eine besonders kompakte Anordnung der Flachspulen 160a-c auf der Fläche 120 ermöglichen. Für die anderen Spulengruppen 165b,c gilt entsprechendes.

Der Drehwinkelbereich Wa der Spulengruppe 165a erstreckt sich von einem Startwinkel WS (Drehwinkel D=0°) bis zu einem Endwinkel WE (D=120°). Eine Breite B der Flachspulen 160a,c in Radialrichtung, also quer zur Kreisbahn 130, nimmt vom Startwinkel WS zum Endwinkel WE ab, die entsprechende Breite B der Flachspule 160b dagegen zu. Die Breiten B verlaufen dabei entlang der Kreisbahn 130 streng monoton (160b: steigend und 160a,c: fallend).

Die zweite Flachspule 160b liegt dabei in Richtung quer zur Kreisbahn 130, also in Radialrichtung, zwischen den Flachspulen 160a,c. Die Flachspulen 160a-c der Spulengruppe 165a nehmen zusammen ein Kreisringsegment der Fläche 120 ein.

Die Flachspulen 160a-c erstrecken sich hier über ein Drittel des Umfangs, also 120°. In der dargestellten Ausführungsform sind die Flachspulen 160a,c jeweils (übertragen bzw. "gebogen" oder "aufgerollt" auf die Kreisform) "trapezoid" geformt, wobei sich zueinander "parallele" Grundseiten der Trapeze jeweils in Umfangsrichtung erstrecken. Die Trapeze der Flachspulen 160a,c tragen jeweils zwei Innenwinkel von 90° auf der von der Flachspule 160b abgewandten Seite, und zwar am Drehwinkel 0° und 120°.

Das Trapez der zweiten Flachspule 160b hat keinen rechten Innenwinkel, ist aber "symmetrisch" in Radialrichtung bezüglich einer Kreisbahn, die mittig in der Fläche 120 liegt.

Eine Auswerteeinrichtung 145 der Sensoranordnung 105 ist dazu eingerichtet, jeweils aktuelle Induktivitäten La-i der Flachspulen 165a-i zu bestimmen. Dazu sind bevorzugt beide Enden jeder der Flachspulen 165a-i mit der Auswerteeinrichtung 145 verbunden (nicht dargestellt). Zur Bestimmung ihrer Induktivität La-i kann eine Flachspule 165a-i einen Teil eines Schwingkreises, etwa eines nicht dargestellten parallelen L-C-Kreises, bilden, und dieser kann in seiner Resonanzfrequenz angeregt werden. Die Resonanzfrequenz kann als Maß für die Induktivität La-i verwendet werden, die ihrerseits von dem jeweiligen durch das Flusselement 125 abgedeckten Bereich 170 der Flachspulen 165a-i abhängt. Die Größe des abgedeckten Bereichs 170 ist mit dem Drehwinkel D des Flusselements 125, und dadurch mit dem des Rotors 185 verknüpft, so dass auf der Basis der Induktivität La-i einer Flachspule 165a-i der Drehwinkel D (bzw. ein Einzeldrehwinkel Ea-i) des Rotors 185 bestimmt werden kann.

Die Auswerteeinrichtung 145 ist weiter bevorzugt dazu eingerichtet, den Drehwinkel D des Rotors 185 bzw. des Flusselements 125 auf der Basis von Einzeldrehwinkeln Eai zu bestimmen, die einzeln bezüglich jeweils einer der Flachspulen 165a-i bestimmt wurden. Dabei kann insbesondere bestimmt werden, ob zwei oder mehr Einzeldrehwinkel Ea-i, die jeweils bezüglich einer der Flachspulen 165a-i bestimmt wurden, einander entsprechen. Ist dies der Fall, so kann der Drehwinkel D bezüglich der einander entsprechenden Einzeldrehwinkel Ea-i bestimmt werden. Der bestimmte Drehwinkel D kann über eine Schnittstelle 150 nach außen bereitgestellt werden. Der bereitgestellte Drehwinkel D kann kontinuierlich innerhalb eines vorbestimmten Bereichs angegeben werden oder diskret eine vorbestimmte Umfangsposition (z.B. "0 Grad / "180 Grad") betreffen. Außerdem kann bestimmt werden, ob eine der Flachspulen 165a-i einen Defekt aufweist.

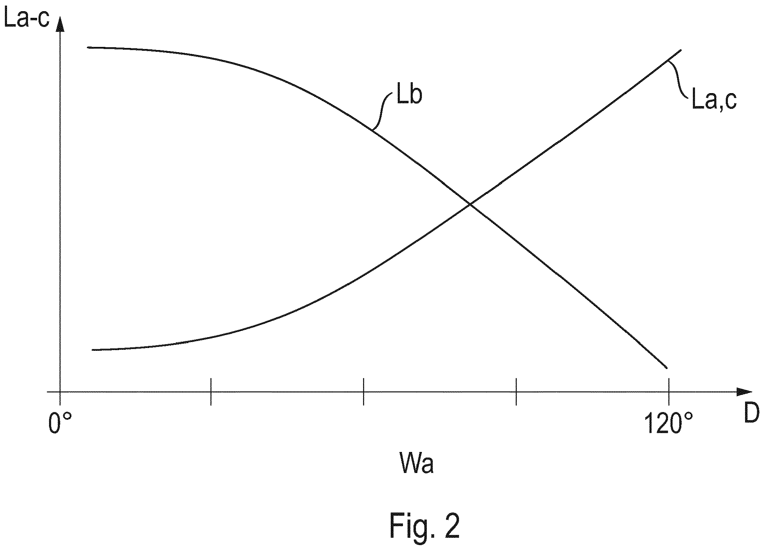

Die Darstellung in Figur 2 zeigt qualitativ exemplarische Verläufe von Induktivitäten Lac der Flachspulen 165a-c in Abhängigkeit verschiedener Drehwinkel D von 0° bis 120° des Flusselements 125 im ersten Winkelbereich Wa. In horizontaler Richtung ist der Drehwinkel D des Flusselements 125 und in vertikaler Richtung die Induktivität La-c angetragen. Induktivitäten La,c der Flachspulen 165a,c sind als identisch gezeigt, obwohl sie in der Praxis üblicherweise wenigstens leicht voneinander abweichen, auch wenn die Flachspulen 165a,c zueinander "symmetrisch" in Radialrichtung bezüglich der Drehachse 155 ausgebildet sind.

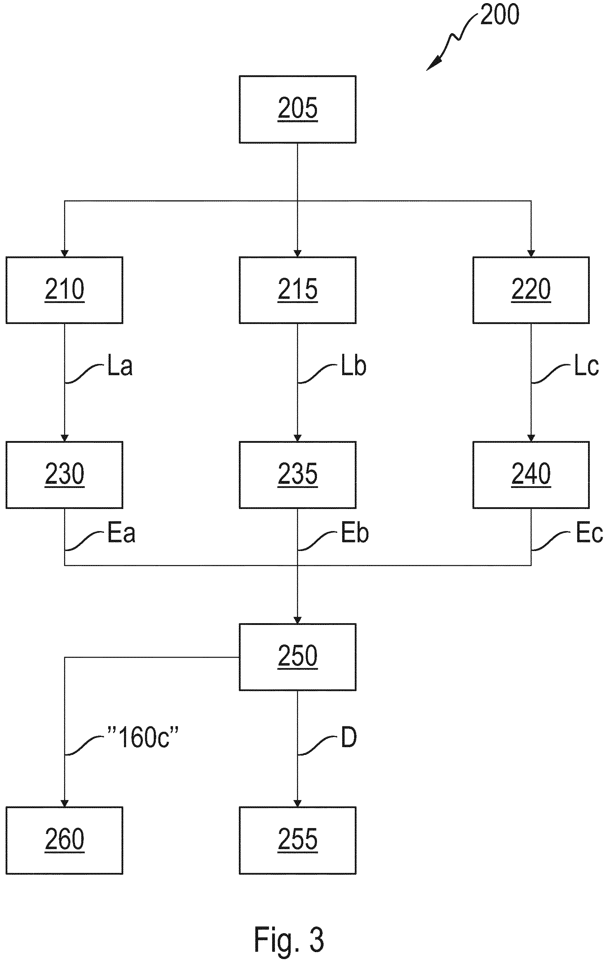

Figur 3 zeigt ein Ablaufdiagramm eines Verfahrens 200 zum Bestimmen des Drehwinkels D des Flusselements 125 gegenüber einer Anordnung von Spulen 165a-i in einer Sensoranordnung 105 wie der von Figur 1. Das Verfahren 200 kann insbesondere mit Hilfe der Auswerteeinrichtung 145 durchgeführt werden und beginnt in einem Schritt 205. Es ist der Übersichtlichkeit halber lediglich beispielhaft für die Spulengruppe 165a stellvertretend für alle Spulengruppen 165a-c und alle Flachspulen 160a-i dargestellt.

In einem Schritt 210 wird eine Induktivität La der Flachspule 160a bestimmt. In entsprechender Weise werden in Schritten 215 und 220 Induktivitäten Lb,c der Flachspulen 165b,c bestimmt. Die Schritte 210-220 können nacheinander, synchronisiert oder nebenläufig zueinander ausgeführt werden.

Zu jeder bestimmten Induktivität La-c wird dann in Schritten 230-240 jeweils ein korrespondierender Einzeldrehwinkel Ea-c des Flusselements 125 bestimmt, beispielsweise auf der Basis einer Tabelle, die Induktivitäten La-c auf Drehwinkel D abbildet, oder auf der Basis eines bekannten Zusammenhangs, der eine funktionale Bestimmung des Drehwinkels D auf der Basis der Induktivität La-c erlaubt.

In einem Schritt 250 werden die bestimmten Einzeldrehwinkel Ea-c miteinander verglichen. Stimmen Einzeldrehwinkel Ea-c einer Mehrzahl von Flachspulen 165a-c miteinander überein, so wird auf der Basis dieser bestimmten Einzeldrehwinkel Ea-c ein Drehwinkel D des Flusselements 125 bestimmt und in einem Schritt 255 bereitgestellt, beispielsweise über die Schnittstelle 150.

Stimmen in der in Figur 1 dargestellten Ausführungsform beispielsweise Einzeldrehwinkel Ea,b, die bezüglich der Flachspulen 160a,b bestimmt wurden, im Wesentlichen überein und weicht der Einzeldrehwinkel Ec, der bezüglich der Flachspule 160c bestimmt wurde, um mehr als ein vorbestimmtes Maß von den anderen beiden Einzeldrehwinkel Ea,b ab, so kann der Drehwinkel D des Flusselements 125 bezüglich der beiden übereinstimmenden Einzeldrehwinkel Ea,b bestimmt werden. In diesem Fall kann die Flachspule 160c, bezüglich der eine von den anderen abweichender Einzeldrehwinkel Ec bestimmt wurde, in einem Schritt 260 als defekt bestimmt werden. Eine als defekt bestimmte Flachspule 160c kann in einem folgenden Durchlauf der dargestellten Schritte nicht zur Bestimmung eines Drehwinkels D herangezogen werden. Das Verfahren 200 kann zyklisch durchlaufen werden, um den Drehwinkel D in vorbestimmten Zeitabständen zu bestimmen.

Figur 4 zeigt die Sensoranordnung 105 aus Fig. 1 nochmals im Zusammenhang mit der Maschine 100 in a) Seitenansicht und b) den Träger 135 in Frontalansicht. Fig. 4 zeigt dabei eine Variante, bei der auf dem Träger 135 insgesamt vier Flusselemente 125 vorhanden sind. Diese erstrecken sich hier in Umfangsrichtung zur Drehachse 155. Der Träger 135 weist eine zentrale Bohrung zur Montage auf dem Rotor 185 bzw. der entsprechenden Welle des Motors bzw. der Maschine 100 auf. Das Flusselement 125 reduziert die Induktivität La-i der Spule 160a-i, wenn sie sich "oberhalb" dieser befindet bzw. über diese hinweggleitet. Das Flusselement kann hier auch als "Kupferaktivator" in der Peripherie der nicht leitenden Scheibe bzw. des Trägers 135 bezeichnet werden. Ein Tragteil 190 für die Flachspulen 60a-i bzw. eine hier symbolisch angedeutete Platine 195, auf der diese aufgebracht sind, ist z.B. mit Schrauben oder Nieten am Stator 180 bzw. einem Motorgehäuse befestigt. Der Motor bzw. die Maschine 100 ist über eine nicht näher erläuterte Montagesäule auf einem festen Montageuntergrund befestigt.

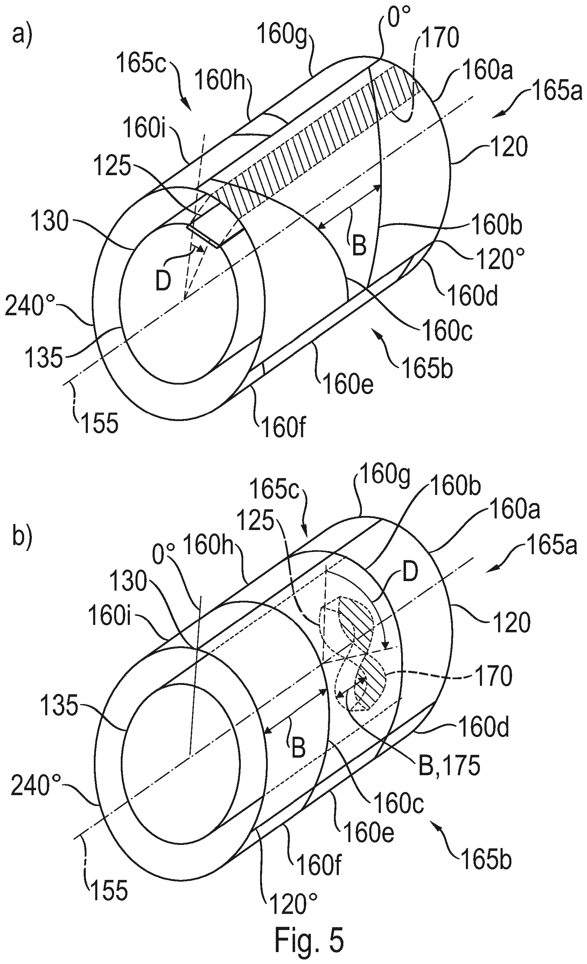

Fig. 5a zeigt eine alternative Sensoranordnung 105. Hier ist die Fläche 120 ein gerader Kreiszylindermantel um die Drehachse 155. Auch die Flachspulen 160a-i sind hier Teilabschnitte des Kreiszylindermantels. Die Spulen sind prinzipiell wie in Fig. 1 geformt, d.h. in einer Ebene "trapezoid", jedoch "aufgerollt" bzw. "gebogen" auf den Kreiszylindermantel. Hier sind wieder drei gleiche Spulengruppen (zumindest teilweise sichtbar) zu je drei Flachspulen (wie in Fig. 1) vorhanden. Jede der Spulengruppen erstreckt sich wieder um Drehwinkelbereiche Wa-c von je 120° in Umfangsrichtung um die Drehachse 155. Auch hier nehmen wie in Fig. 1 innerhalb einer Spulengruppe 165 die Breiten B (nun gemessen in Axialrichtung) der Flachspulen 160a-i in Umfangsrichtung gegenläufig streng monoton zu oder ab. Das Flusselement 125 ist in einem zylinderförmigen Träger 135 aufgenommen, der fest am Rotor 185 befestigt ist. Die Flachspulen 160a-i nehmen zusammen einen senkrechten Kreiszylindermantel ein.

Figur 5b zeigt eine weitere Variante einer Sensoranordnung 125, prinzipiell gemäß Fig. 5a. Hier ist das Flusselement 125 mit einer in Umfangsrichtung sinusförmigen bzw. sich sinusförmig verändernden Eigenschaft 175, nämlich dessen Breite B ausgeführt. Die Flachspulen 160a-i weisen jedoch hier jeweils konstante Breite B auf.

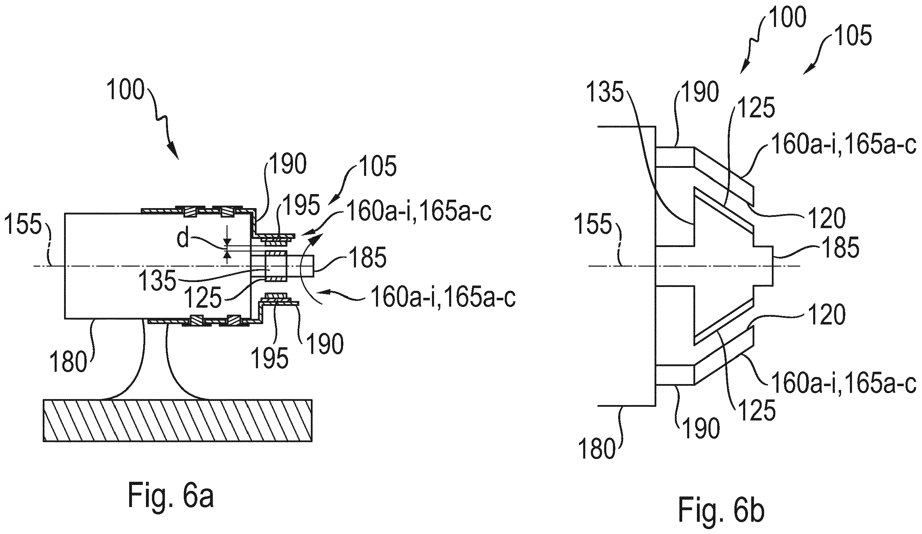

Figur 6a) zeigt (wahlweise, daher nicht konkret dargestellt) die Sensoranordnung 105 aus Fig. 5a,b, eingebaut in der Maschine 100 gemäß Fig. 4a. Der Träger 135 ist ein dicker PVC/Plastik/Polymer-Ring zur Befestigung des Aktivators bzw. Flusselements 125 auf der Motorwelle bzw. dem Rotor 180. Die induktiven Sensoren bzw. Flachspulen 160a-i sind hier Multi-Windungs-/Multi-Ebenen-Flachspulen.

Ein Abstand d bezeichnet in Figuren 4a und 6a jeweils den Abstand zwischen Sensoren (Flachspulen 160) und Aktivator (Flusselement 125).

Figur 6b) zeigt eine alternative Form, nämlich eine Konusform für Flachspulen 160, Flusselemente 125, Träger 135 und Tragteil 190. Hier ist die Ausführungsform eine Konusform und somit eine "Zwischenform" zwischen der "Scheibenform" (Fig. 1) und der "Zylinderform" (Fig. 5). Ansonsten gelten sinngemäß die Erläuterungen zu oben.

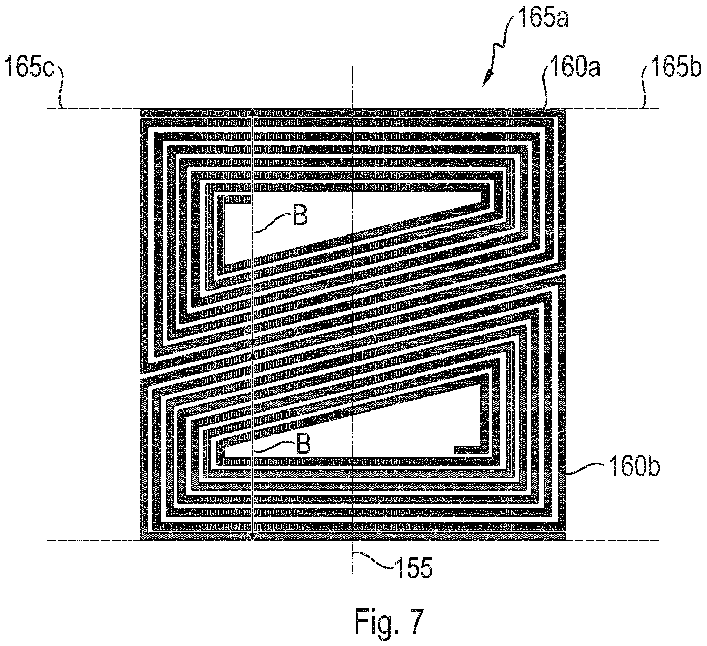

Figur 7 zeigt ein Beispiel für eine Spulengruppe 165a mit nur zwei Flachspulen 160a,b, welche sich z.B. für die Ausführungsformen der Figuren 5a, b eignet. Auch hier sind die Breiten B (in Axialrichtung) gemessen gegenläufig streng monton in Umfangsrichtung fallend und steigend ausgeführt. Zu sehen ist jeweils eine erste Ebene der Flachspulen mit eine Vielzahl von Windungen. Weitere Ebenen schließen sich hier nicht sichtbar "unter" der Papierebene an.

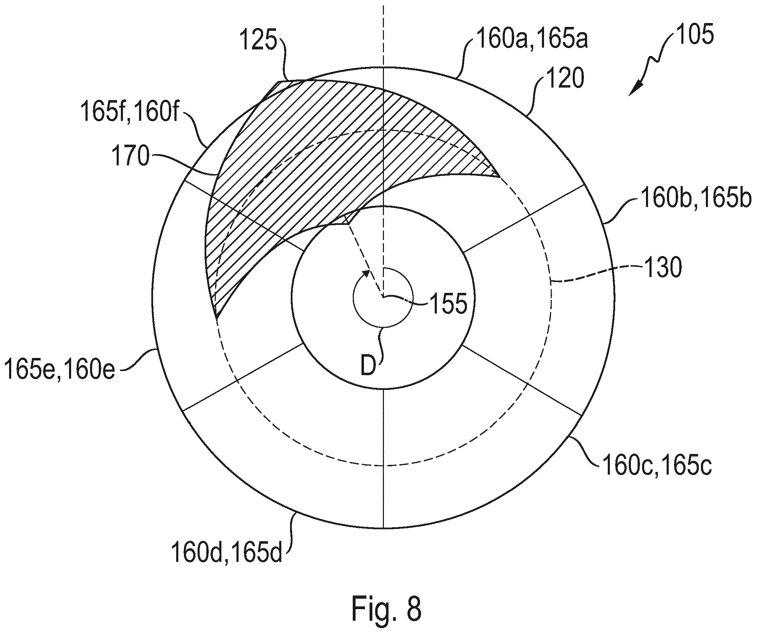

Figur 8 zeigt in einer Draufsicht in Richtung der Drehachse 155 eine alternative Ausführungsform einer Sensoranordnung, prinzipiell entsprechend Fig. 1. Hier wurde eine ebene Sensoranordnung aus sechs quadratischen Spulen und einem rhombenförmigen Flusselement auf eine Kreisform "gebogen" bzw. "abgerollt". Dabei weist jede der sechs Spulengruppen165a-f jeweils eine einzige Flachspule 160a-f auf. Die entsprechende ebene Ausgangs-Sensoranordnung ist aus Figur 1 im Dokument "A.K. Palit, 'Frequency Response Modeling of Inductive Position Sensor with Finite Element Tools', Proceedings of the 2014 COMSOL Conference in Cambridge, https://www.comsol.com/ paper/ download/ 199331/ palit_paper.pdf, abgerufen am 05.12.2018" bekannt.

### Bezugszeichen

- 100: Maschine
- 105: Sensoranordnung
- 120: Fläche
- 125: Flusselement
- 130: Kreisbahn
- 135: Träger
- 145: Auswerteeinrichtung
- 150: Schnittstelle
- 155: Drehachse
- 160a-i: Flachspule
- 165a-c: Spulengruppe
- 170: Bereich
- 175: Eigenschaft
- 180: Stator
- 185: Rotor
- 190: Tragteil
- 195: Platine
- 200: Verfahren
- 205: Schritt Start
- 210: Schritt Induktivität La
- 215: Schritt Induktivität Lb
- 220: Schritt Induktivität Lc
- 230: Schritt Einzeldrehwinkel Ea
- 235: Schritt Einzeldrehwinkel Eb
- 240: Schritt Einzeldrehwinkel Ec
- 250: Schritt Mehrheitsentscheidung
- 255: Schritt Bereitstellen
- 260: Schritt Defekte Flachspule

- Wa-c: Drehwinkelbereich
- D: Drehwinkel
- La-i: Induktivität
- Ea-i: Einzeldrehwinkel
- A: Größe
- WS: Startwinkel
- WE: Endwinkel
- B: Breite
- d: Abstand

## Patentansprüche

1. Sensoranordnung (105) zur Erfassung eines Drehwinkels (D) eines Flusselements (125), das entlang einer Kreisbahn (130) um eine Drehachse (155) drehbar ist,
- mit dem mindestens einen Flusselement (125), und
- mit mindestens einer Spulengruppe (165a-c) mit jeweils mindestens einer Flachspule (160a-i), wobei mindestens zwei Flachspulen (16a-i) vorhanden sind,
- wobei sich die Flachspulen (160a-i) jeweils entlang einer die Drehachse (155) konzentrisch umgebenden Fläche (120) erstrecken,
- wobei die Fläche (120) parallel entlang der Kreisbahn (130) verläuft, und sich alle Flachspulen (160a-i) einer Spulengruppe (165a-c) jeweils über denselben Drehwinkelbereich (Wa-c) erstrecken,
- wobei die Flachspulen (160a-i) derart geformt sind, dass eine aktuelle Induktivität (La-i) jeder Flachspule (160a-i) von dem aktuellen Drehwinkel (D) des Flusselements (125) abhängig ist,
- mit einer Auswerteeinrichtung (145), die dazu eingerichtet ist, für jede der Flachspulen (160a-i) die aktuelle Induktivität (La-i) zu ermitteln und einen aktuellen jeweiligen Einzeldrehwinkel (Ea-i) des Flusselements (125) anhand der ermittelten Induktivität (La-i) der jeweiligen Flachspule (160a-i) zu bestimmen und den Drehwinkel (D) des Flusselements (125) auf der Basis wenigstens zweier übereinstimmender Einzeldrehwinkel (Ea-i) bereitzustellen,
- wobei mindestens zwei der Flachspulen (160a-i) derart geformt sind, dass jeweils eine aktuelle Größe (A) eines vom Flusselement (125) aktuell abgedeckten Bereichs (170) der Flachspulen (160a-i) vom aktuellen Drehwinkel (D) des Flusselements (125) abhängig ist,
- wobei sich dabei der Drehwinkelbereich (Wa-c) mindestens einer der Spulengruppen (165a-c) zwischen einem Startwinkel (WS) und einem Endwinkel (WE) erstreckt und eine Breite (B) einer derartigen ersten Flachspule (160a-i) der Spulengruppe (165a-c) quer zur Kreisbahn (130) vom Startwinkel (WS) aus jeweils abnimmt und eine Breite (B) einer derartigen zweiten Flachspule (160a-i) der Spulengruppe (165a-c) vom Startwinkel (WS) aus jeweils zunimmt,
- wobei mindestens eine der Spulengruppen (165a-c) mindestens drei Flachspulen (160a-i) enthält, wobei eine zweite Flachspule (160a-i) in einer Richtung quer zur Kreisbahn (130) zwischen der ersten (160a-i) und der dritten Flachspule (160a-i) liegt.

2. Sensoranordnung (105) nach Anspruch 1,
**dadurch gekennzeichnet, dass** die Sensoranordnung (105) mindestens zwei Spulengruppen (165a,b) enthält, die sich in Umfangsrichtung über unterschiedliche Drehwinkelbereiche (Wa-c) erstrecken.

3. Sensoranordnung (105) nach Anspruch 2,
**dadurch gekennzeichnet, dass** mindestens zwei der Drehwinkelbereiche (Wa,b) nicht überlappen und lückenlos aneinander anschließen.

4. Sensoranordnung (105) nach einem der vorhergehenden Ansprüche,
**dadurch gekennzeichnet, dass** die Fläche (120) eben ist und sich quer zur Drehachse (155) erstreckt oder die Fläche (120) Konusform oder eine Kreiskegelform oder eine Mantelflächenform eines Kreiszylinders um die Drehachse (155) aufweist.

5. Sensoranordnung (105) nach einem der vorhergehenden Ansprüche,
**dadurch gekennzeichnet, dass** das Flusselement (125) eine sinusförmige Eigenschaft (175) entlang der Kreisbahn (130) aufweist.

6. Sensoranordnung (105) nach einem der vorangehenden Ansprüche,
**dadurch gekennzeichnet, dass** die Flachspulen (160a-i) mindestens einer der Spulengruppen (165a-c) zusammen ein Kreisringsegment oder einen Konusmantel einen senkrechten Kreiszylindermantel der Fläche (120) einnehmen.

7. Sensoranordnung (105) nach einem der vorangehenden Ansprüche,
**dadurch gekennzeichnet, dass**
die Breiten (B) der Flachspulen (160a-i) quer zur Kreisbahn (130) entlang der Kreisbahn (130) jeweils streng monoton verlaufen.

8. Sensoranordnung (105) nach einem der vorangehenden Ansprüche,
**dadurch gekennzeichnet, dass** mindestens eine der Flachspulen (160a-i) mehrere Ebenen aufweist.

9. Sensoranordnung (105) nach einem der vorangehenden Ansprüche,
**dadurch gekennzeichnet, dass** das Flusselement (125) ein elektrisch leitfähiges Element enthält, das sich parallel zur Fläche (120) erstreckt.

10. Elektrische Maschine (100) mit einem Stator (180) und mit einem um eine Drehachse (155) relativ zum Stator (180) drehbaren Rotor (185) und mit der Sensoranordnung (105) nach einem der vorhergehenden Ansprüche, wobei die Drehachse (155) der Sensoranordnung (105) die der Maschine (100) ist und das Flusselement (125) drehfest mit dem Rotor (185) gekoppelt ist und die Spulengruppen (165a-c) drehfest mit dem Stator (180) gekoppelt sind oder umgekehrt.

11. Maschine (100) nach Anspruch 10,
**dadurch gekennzeichnet, dass** das Flusselement (125) auf einem nicht leitenden, am Rotor (185) befestigten Träger (135) montiert ist.

12. Verfahren zur Erfassung eines Drehwinkels (D) eines Flusselements (125) einer Sensoranordnung (105) nach einem der Ansprüche 1 bis 9 oder einer Maschine (100) nach einem der Ansprüche 10 bis 11, bei dem:
- für jede der Flachspulen (160a-i) die aktuelle Induktivität (La-i) ermittelt wird, und
- ein aktueller jeweiliger Einzeldrehwinkel (Ea-i) des Flusselements (125) anhand der ermittelten Induktivität (La-i) der jeweiligen Flachspule (160a-i) bestimmt wird, und
- der Drehwinkel (D) des Flusselements (125) auf der Basis wenigstens zweier übereinstimmender Einzeldrehwinkel (Ea-i) bereitgestellt wird,
- wobei die Sensoranordnung (105) mindestens drei Flachspulen (160a-i) enthält, bei dem eine defekte Flachspule (160a-i) der Spulengruppe (165a-c) erkannt wird, falls ein auf der Basis ihrer Induktivität (La-i) bestimmter Einzeldrehwinkel (Ea-i) von einander entsprechenden Einzeldrehwinkeln (Ea-i) anderen Flachspulen (160a-i) abweicht.

## Claims

1. Sensor assembly (105) for detecting a rotational angle (D) of a flux element (125) which is rotatable along a circular path (130) about a rotation axis (155),
- having the at least one flux element (125); and
- having at least one coil group (165a-c) having in each case at least one flat coil (160a-i), wherein at least two flat coils (16a-i) are present;
- wherein the flat coils (160a-i) extend in each case along a face (120) which concentrically surrounds the rotation axis (155);
- wherein the face (120) runs in parallel along the circular path (130), and all flat coils (160a-i) of one coil group (165a-c) extend in each case across the same rotational angular range (Wa-c);
- wherein the flat coils (160a-i) are shaped in such a manner that a current inductance (La-i) of each flat coil (160a-i) is a function of the current rotational angle (D) of the flux element (125);
- having an evaluation installation (145) which is specified for determining the current inductance (La-i) for each of the flat coils (160a-i) and for determining a current respective individual rotational angle (Ea-i) of the flux element (125) by means of the determined inductance (La-i) of the respective flat coil (160a-i), and for providing the rotational angle (D) of the flux element (125) based on at least two matching individual rotational angles (Ea-i);
- wherein at least two of the flat coils (160a-i) are shaped in such a manner that a current size (A) of a region (170) of the flat coils (160a-i) currently covered by the flux element (125) is in each case a function of the current rotational angle (D) of the flux element (125);
- wherein the rotational angle range (Wa-c) of at least one of the coil groups (165a-c) extends between a start angle (WS) and a finish angle (WE), and a width (B) of such a first flat coil (160a-i) of the coil group (165a-c), proceeding from the start angle (WS), decreases in each case transversely to the circular path (130), and a width (B) of such a second flat coil (160a-i) of the coil group (165a-c), proceeding from the start angle (WS), increases in each case;
- wherein at least one of the coil groups (165a-c) contains at least three flat coils (160a-i), wherein a second flat coil (160a-i) in a direction transverse to the circular path (130) lies between the first flat coil (160a-i) and the third flat coil (160a-i).

2. Sensor assembly (105) according to Claim 1, **characterized in that** the sensor assembly (105) contains at least two coil groups (165a,b) which in the circumferential direction extend across different rotational angle ranges (Wa-c).

3. Sensor assembly (105) according to Claim 2, **characterized in that** at least two of the rotational angle ranges (Wa,b) do not overlap one another and seamlessly adjoin one another.

4. Sensor assembly (105) according to one of the preceding claims, **characterized in that** the face (120) is planar and extends transversely to the rotation axis (155), or the face (120) about the rotation axis (155) has a conical shape or a circular conical shape or the shape of a lateral surface of a circular cylinder.

5. Sensor assembly (105) according to one of the preceding claims, **characterized in that** the flux element (125) along the circular path (130) has a sinusoidal characteristic (175).

6. Sensor assembly (105) according to one of the preceding claims, **characterized in that** the flat coils (160a-i) of at least one of the coil groups (165a-c) conjointly occupy an annular segment or a cone shell or a perpendicular circular-cylindrical shell of the face (120).

7. Sensor assembly (105) according to one of the preceding claims, **characterized in that** the widths (B) of the flat coils (160a-i) transversely to the circular path (130) run in each case strictly monotonically along the circular path (130).

8. Sensor assembly (105) according to one of the preceding claims, **characterized in that** at least one of the flat coils (160a-i) has a plurality of planes.

9. Sensor assembly (105) according to one of the preceding claims,
**characterized in that** the flux element (125) contains an electrically conductive element which extends parallel to the face (120).

10. Electric machine (100) having a stator (180), and having a rotor (185) which is rotatable relative to the stator (180) about a rotation axis (155), and having the sensor assembly (105) according to one of the preceding claims, wherein the rotation axis (155) of the sensor assembly (105) is that of the machine (100), and the flux element (125) is coupled in a rotationally fixed manner to the rotor (185) and the coil groups (165a-c) are coupled in a rotationally fixed manner to the stator (180), or vice versa.

11. Machine (100) according to Claim 10,
**characterized in that** the flux element (125) is mounted on a non-conducting support (135) which is fastened to the rotor (185).

12. Method for detecting a rotational angle (D) of a flux element (125) of a sensor assembly (105) according to one of Claims 1 to 9, or of a machine (100) according to one of Claims 10 to 11, in which method:
- the current inductance (La-i) is determined for each of the flat coils (160a-i); and
- a current respective individual rotational angle (Ea-i) of the flux element (125) is determined by means of the determined inductance (La-i) of the respective flat coil (160a-i); and
- the rotational angle (D) of the flux element (125) is provided based on at least two matching individual rotational angles (Ea-i);
- wherein the sensor assembly (105) contains at least three flat coils (160a-i), in which method a defective flat coil (160a-i) of the coil group (165a-c) is detected if an individual rotational angle (Ea-i) determined based on the inductance (La-i) of said flat coil (160a-i) deviates from mutually matching individual rotational angles (Ea-i) of other flat coils (160a-i).

## Revendications

1. Ensemble formant capteur (105) destiné à détecter un angle de rotation (D) d'un élément de flux (125), qui peut tourner autour d'un axe de rotation (155) le long d'une trajectoire circulaire (130), ledit ensemble formant capteur comprenant
- au moins un élément de flux (125), et
- au moins un groupe de bobines (165a-c) comportant chacune au moins une bobine plate (160a-i), au moins deux bobines plates (16a-i) étant prévues,
- les bobines plates (160a-i) s'étendant chacune le long d'une surface (120) qui entoure concentriquement l'axe de rotation (155),
- la surface (120) s'étendant parallèlement le long de la trajectoire circulaire (130), et toutes les bobines plates (160a-i) d'un groupe de bobines (165a-c) s'étendant sur la même plage d'angle de rotation (Wa-c),
- les bobines plates (160a-i) étant formées de manière à ce qu'une inductance actuelle (La-i) de chaque bobine plate (160a-i) dépende de l'angle de rotation actuel (D) de l'élément de flux (125),
- un dispositif d'évaluation (145), qui est conçu pour déterminer, pour chacune des bobines plates (160ai), l'inductance actuelle (La-i) et un angle de rotation individuel actuel (Ea-i) de l'élément de flux (125) sur la base de l'inductance (La-i) déterminée de la bobine plate respective (160a-i) et pour fournir l'angle de rotation (D) de l'élément de flux (125) sur la base d'au moins deux angles de rotation individuels (Ea-i) en coïncidence,
- au moins deux des bobines plates (160a-i) étant formées de manière à ce que la taille actuelle (A) d'une zone (170) des bobines plates (160a-i) actuellement couverte par l'élément de flux (125) dépende de l'angle de rotation actuel (D) de l'élément de flux (125),
- la plage d'angle de rotation (Wa-c) d'au moins un des groupes de bobines (165a-c) s'étendant entre un angle initial (WS) et un angle final (WE) et une largeur (B) d'une telle première bobine plate (160a-i) du groupe de bobines (165a-c) diminuant transversalement à la trajectoire circulaire (130) à partir de l'angle initial (WS) et une largeur (B) d'une telle deuxième bobine plate (160a-i) du groupe de bobines (165a-c) augmentant à partir de l'angle initial (WS),
- au moins un des groupes de bobines (165a-c) contenant au moins trois bobines plates (160a-i), une deuxième bobine plate (160a-i) étant située entre la première (160a-i) et la troisième (160a-i) bobine plate dans une direction transversale à la trajectoire circulaire (130).

2. Ensemble formant capteur (105) selon la revendication 1,
**caractérisé en ce que** l'ensemble formant capteur (105) contient au moins deux groupes de bobines (165a, b) qui s'étendent dans la direction circonférentielle sur différentes plages d'angle de rotation (Wa-c).

3. Ensemble formant capteur (105) selon la revendication 2,
**caractérisé en ce qu'**au moins deux des plages d'angle de rotation (Wa, b) ne se chevauchent pas et se raccordent l'une à l'autre de manière jointive.

4. Ensemble formant capteur (105) selon l'une des revendications précédentes,
**caractérisé en ce que** la surface (120) est plane et s'étend transversalement à l'axe de rotation (155) ou la surface (120) a une forme conique ou une forme de cône à base circulaire ou une forme de surface latérale d'un cylindre à base circulaire autour de l'axe de rotation (155).

5. Ensemble formant capteur (105) selon l'une des revendications précédentes,
**caractérisé en ce que** l'élément de flux (125) présente une propriété sinusoïdale (175) le long de la trajectoire circulaire (130).

6. Ensemble formant capteur (105) selon l'une des revendications précédentes,
**caractérisé en ce que** les bobines plates (160a-i) d'au moins un des groupes de bobines (165a-c) occupent conjointement un segment d'anneau circulaire ou une enveloppe conique ou une enveloppe cylindrique circulaire perpendiculaire de la surface (120).

7. Ensemble formant capteur (105) selon l'une des revendications précédentes,
**caractérisé en ce que** les largeurs (B) des bobines plates (160a-i) s'étendent de manière strictement monotone transversalement à la trajectoire circulaire (130) le long de la trajectoire circulaire (130).

8. Ensemble formant capteur (105) selon l'une des revendications précédentes, **caractérisé en ce qu'**au moins une des bobines plates (160a-i) présente plusieurs niveaux.

9. Ensemble formant capteur (105) selon l'une des revendications précédentes, **caractérisé en ce que** l'élément de flux (125) contient un élément électriquement conducteur qui s'étend parallèlement à la surface (120).

10. Machine électrique (100) comprenant un stator (180) et un rotor (185) qui peut tourner sur un axe de rotation (155) par rapport au stator (180) et l'ensemble formant capteur (105) selon l'une des revendications précédentes, l'axe de rotation (155) de l'ensemble formant capteur (105) étant celui de la machine (100) et l'élément de flux (125) étant accouplé solidairement en rotation au rotor (185) et les groupes de bobines (165a-c) étant accouplés solidairement en rotation au stator (180) ou vice versa.

11. Machine (100) selon la revendication 10, **caractérisée en ce que** l'élément de flux (125) est monté sur un support non conducteur (135) fixé au rotor (185) .

12. Procédé de détection d'un angle de rotation (D) d'un élément de flux (125) d'un ensemble formant capteur (105) selon l'une des revendications 1 à 9 ou d'une machine (100) selon l'une des revendications 10 à 11, procédé dans lequel :
- l'inductance actuelle (La-i) est déterminée pour chacune des bobines plates (160a-i), et
- un angle de rotation individuel respectif actuel (Ea-i) de l'élément de flux (125) est déterminé sur la base de l'inductance déterminée (La-i) de la bobine plate respective (160a-i), et
- l'angle de rotation (D) de l'élément de flux (125) est obtenu sur la base d'au moins deux angles de rotation individuels (Ea-i) en coïncidence,
- l'ensemble formant capteur (105) contenant au moins trois bobines plates (160a-i) dans lesquelles une bobine plate défectueuse (160a-i) du groupe de bobines (165a-c) est détectée si un angle de rotation individuel (Ea-i) déterminé sur la base de son inductance (La-i) diffère des angles de rotation individuels correspondants (Ea-i) d'autres bobines plates (160a-i).
